# FASCICULE DE BREVET EUROPEEN

(11) **EP 3 298 645 B1**
(45) Date de publication et mention de la délivrance du brevet: **23.01.2019**
(21) Numéro de dépôt: 16722899.8
(22) Date de dépôt: 17.05.2016
(51) Int. Cl.: H01M 8/0254, B29C 53/18, H01M 8/0267, H01M 8/0297

(54) **PROCÉDÉ DE TRAITEMENT D'UNE PLAQUE BIPOLAIRE POUR PILE À COMBUSTIBLE**
VERFAHREN ZUR BEHANDLUNG EINER BIPOLAREN PLATTE FÜR EINEN BRENNSTOFFZELLENSTAPEL
PROCESS FOR TREATING A BIPOLAR PLATE FOR A FUEL-CELL STACK

(30) Priorité: 22.05.2015 FR 1554610
(43) Date de publication de la demande: 28.03.2018
(73) Titulaire: Compagnie Générale des Etablissements Michelin, 63000 Clermont-Ferrand (FR)
(72) Inventeur: BLANC, Claude, 63040 Clermont-Ferrand Cedex 09 (FR)
(74) Mandataire: Noel, Luminita
(86) Numéro de dépôt international: PCT/EP2016/060967
(87) Numéro de publication internationale: WO 2016/188790

(56) Documents cités:
- US-A1- 2009 226 785
- US-A1- 2011 281 192
- US-B2- 7 451 907

## Description

La présente invention concerne le domaine des piles à combustibles, en particulier le domaine des piles à combustibles aptes à être utilisées dans les véhicules automobiles.

Une pile à combustible permet la génération d'énergie électrique par une réaction électrochimique à partir d'un carburant, généralement de l'hydrogène, et d'un comburant, généralement l'oxygène.

Une pile à combustible du type à membrane échangeuse de protons à électrolyte solide (PEMFC) comprend habituellement un empilement de cellules élémentaires constituant des générateurs électrochimiques, chacune des cellules étant séparée des cellules adjacentes par des plaques bipolaires. Chaque cellule comprend un élément anodique et un élément cathodique, séparés par un électrolyte solide sous la forme d'une membrane échangeuse d'ions, réalisée par exemple en un matériau polymère perfluoré sulfuré. Selon une variante de réalisation habituelle, chaque plaque bipolaire assure d'un côté l'alimentation en carburant de la cellule adjacente à ce côté et de l'autre côté l'alimentation en comburant de la cellule adjacente à cet autre côté, les alimentations assurées par les plaques bipolaires se faisant en parallèle.

L'empilement successif des plaques et des cellules est maintenu sous des pressions d'appui devant garantir un bon contact électrique et une étanchéité souhaitée. Habituellement, l'empilement comprend des plaques rigides d'extrémité reliées par des tirants assurant les pressions d'appui, avec insertion d'éléments ressorts pour limiter les effets des variations de température et d'hygrométrie sur les pressions d'appui.

Néanmoins, actuellement, une bonne étanchéité souhaitée ne peut être obtenue qu'en appliquant des pressions d'appui élevées, notamment lorsque l'empilement comprend un grand nombre de cellules élémentaires et de plaques bipolaires intermédiaires. Il s'ensuit que les tirants et leurs attaches doivent être dimensionnés en conséquence.

Les brevets US2009/0226785 et US2001/281192 décrivent des plaques simples que l'on fait passer entre deux rouleaux pour les redresser. Cependant, ces rouleaux produisent un effet d'écrasement entre eux des plaques selon des lignes parallèles à leurs axes. Le redressement recherché ne peut être complètement atteint.

Selon un mode de réalisation, il est proposé un procédé de traitement d'une plaque bipolaire pour pile à combustible présentant des faces opposées et comprenant deux tôles embouties fixées l'une sur l'autre et présentant des rainures dans les faces opposées de la plaque bipolaire.

Ce procédé comprend : faire passer la plaque bipolaire entre deux rangées de rouleaux parallèles de redressement, les rouleaux de redressement de l'une des rangées de rouleaux étant, dans la direction du déplacement de la plaque bipolaire à traiter, décalés par rapport à ceux de l'autre rangée de rouleaux, lesdites rainures étant aptes à se déformer lors du passage de la plaque bipolaire entre lesdites rangées de rouleaux de redressement, de sorte que les faces opposées de la plaque bipolaire tendent vers des plans parallèles.

Ainsi, la plaque bipolaire se trouve corrigée de façon à être insérée dans un empilage en réduisant les forces nécessaires pour exercer les pressions d'appui souhaité pour l'obtention de l'étanchéité souhaitée et éventuellement des contacts électriques.

Les deux rangées de rouleaux de redressement peuvent être réglées à une distance correspondant à l'épaisseur souhaitée à atteindre de la plaque bipolaire.

La plaque bipolaire peut être déplacée entre les rangées de rouleaux de redressement dans une direction perpendiculaire à la direction dans laquelle elle présente un plus grand nombre de longues rainures.

Les deux rangées de rouleaux de redressement peuvent déterminer des plans parallèles de roulement.

Un procédé de traitement d'une plaque bipolaire pour pile à combustible va maintenant être décrit à titre d'exemple non limitatif, illustré par le dessin sur lequel :
- la figure 1 représente une vue éclatée en perspective d'une pile à combustible, incluant une plaque bipolaire ;
- la figure 2 représente une vue de face de la plaque bipolaire de la pile à combustible de la figure 1 ;
- la figure 3 représente une coupe transversale partielle agrandie de la plaque bipolaire ;
- la figure 4 représente une vue de dessus d'une machine de redressement ; et
- la figure 5 représente une coupe de la machine de redressement, dans un sens de déplacement.

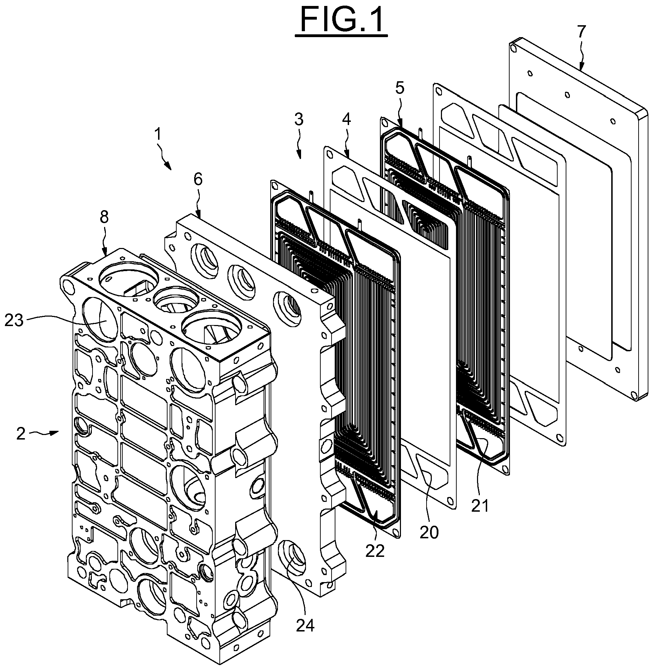

Comme illustré sur la figure 1, une pile à combustible 1 comprend notamment un empilage 2 de forme parallélépipédique, composé de plaques superposées selon un axe d'empilage et accolées de façon étanche, à savoir un ensemble 3 de cellules élémentaires 4 en forme de plaques, séparées par des plaques bipolaires 5, des plaques terminales 6 et 7 épaisses et rigides, enserrant l'ensemble 2, et enfin un bloc d'extrémité 8. Cet empilage 2 est maintenu par des moyens de compression (non représentés) tels que des tirants.

Chaque cellule 4 comprend trois couches superposées, à savoir une anode, un électrolyte et une cathode (non représentées). Chaque plaque bipolaire 5 assure d'un côté l'alimentation en carburant, généralement de l'hydrogène, de la cellule adjacente à ce côté et de l'autre côté l'alimentation en comburant, généralement l'oxygène, de la cellule adjacente à cet autre côté, de sorte que des générateurs électrochimiques sont constitués.

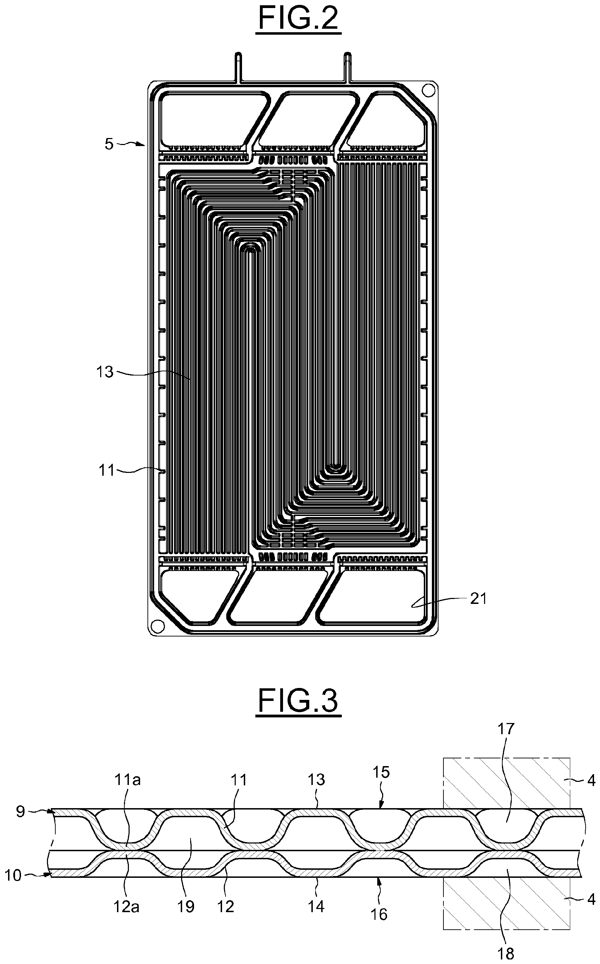

Comme illustré en particulier sur les figures 2 et 3, chaque plaque bipolaire 5 est formée par deux tôles embouties 9 et 10 superposées.

Ces tôles embouties 9 et 10 déterminent des pluralités de rainures opposées 11 et 12 en retrait par rapport à des zones 13 et 14 déterminant des faces opposées 15 et 16 de la plaque polaire 5. Les fonds 11a et 12a des rainures 11 et 12 sont accolés et fixées entre eux par exemple par soudage. Les rainures 11 et 12 présentent des sections en forme de U à branches symétriques divergentes.

Les faces 15 et 16 sont destinées à être en contact avec les faces adjacentes des cellules élémentaires 4 adjacentes, de sorte à déterminer des canaux 17 et 18 pour sélectivement la circulation du carburant et du comburant, ces canaux s'étendant perpendiculairement à l'axe de l'empilage selon une topographie souhaitée.

En outre, entre les tôles 9 et 10 sont déterminés des canaux 19 pouvant être utilisés pour la circulation d'un fluide de refroidissement.

Comme illustré en particulier sur les figures 1 et 2, les cellules élémentaires 4 en forme de plaques et les plaques bipolaires 5 présentent des pluralités de passages axiaux 20 et 21 superposés, déterminant une pluralité de conduits axiaux 22 dans lesquels débouchent sélectivement les canaux 17, 18 et 20.

Le bloc d'extrémité 8 présente une pluralité de canaux 23 aptes à être reliés à des conduits extérieurs (non représentés) et reliés sélectivement aux canaux axiaux 22 au travers de passages traversants 24 de la plaque terminale 6.

Comme indiqué plus haut, les plaques bipolaires 5 sont issues d'une fabrication par emboutissage et soudage et présentent une épaisseur qui est, normalement, égale à une valeur souhaitée. Néanmoins, une telle fabrication engendre des déformations telles que du cintrage et du voilage des plaques bipolaires 5.

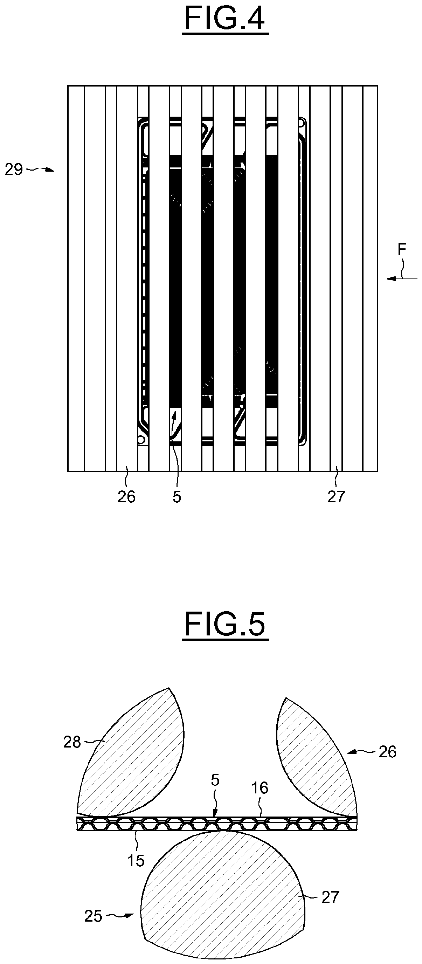

Comme illustré sur les figures 4 et 5, il est proposé de faire passer à plat, chaque plaque bipolaire 5 entre deux rangées 25 et 26 de rouleaux cylindriques parallèles de redressement 27 et 28 d'une machine 29 de redressement, munie de moyens réglables de support et de moyens d'entraînement en rotation de ces rouleaux.

Les nombres des rouleaux de redressement 27 et 28 sont tels que plusieurs des rouleaux de redressement 27 et 28 peuvent être en appui sur les faces opposées 15 et 16 de la plaque bipolaire 5.

Les rouleaux de redressement 27 de la rangée 25 et les rouleaux 28 des rangées 26 sont décalés les uns par rapport aux autres dans la direction de translation (figure 5), par exemple d'un demi pas.

Les rouleaux de redressement 27 et 28 sont entraînés en rotation par des moyens adaptés (non représentés), pour déplacer en translation la plaque bipolaire 5 à une vitesse de translation adaptée.

Dans la mesure ou la plaque bipolaire 5 présente un plus grand nombre de longues rainures 11 et 12 s'étendant selon une première direction par rapport à celle s'étendant selon d'autres directions, il est préférable de la faire passer entre les rangées 25 et 26 de rouleaux de redressement 27 et 28 de sorte qu'elle se déplace perpendiculairement à cette première direction.

La distance entre les plans opposés de roulement déterminés par les rouleaux de redressement 27 et 28 des rangées 25 et 26 est substantiellement égale ou très voisine de l'épaisseur souhaitée de la plaque bipolaire 5.

Au cours de son déplacement entre les deux rangées 25 et 26 de rouleaux parallèles 27 et 28, la plaque bipolaire 5 à traiter subit des déformations de flexion, au moins en certains endroits de son déplacement et dans un sens et/ou dans l'autre, entre deux rouleaux de redressement successifs de l'une des rangées et le rouleau de redressement de l'autre rangée situé entre ces deux rouleaux de redressement.

Ces déformations successives de flexion sont aptes à déformer les tôles 9 et 10 la constituant, en particulier grâce à l'existence des rainures 11 et 12 qui peuvent se déformer, de sorte que les faces opposées 15 et 16 de la plaque bipolaire 5 traitée tendent vers des plans parallèles.

Les réglages de la distance entre les plans opposés de roulement des rangées 25 et 26 et la vitesse de rotation des rouleaux 27 et 28 sont adaptés pour produire cet effet.

Ainsi, après le traitement ci-dessus, les plaques bipolaires 5, corrigées et aplaties, peuvent être insérées dans l'ensemble 3, de sorte que les pressions souhaitées d'appui entre les différentes plaques constituant l'empilage 2, pour assurer l'étanchéité souhaitée et éventuellement les contacts électriques souhaités, peuvent être obtenues avec des forces axiales réduites.

## Revendications

1. Procédé de traitement d'une plaque bipolaire (5) pour pile à combustible, cette plaque présentant des faces opposées (15, 16) et comprenant deux tôles embouties fixées l'une sur l'autre et présentant des rainures dans les faces opposées de la plaque bipolaire,
procédé comprenant : faire passer la plaque bipolaire (5) entre deux rangées (25, 26) de rouleaux parallèles de redressement (27, 28), les rouleaux de redressement de l'une des rangées de rouleaux étant, dans la direction du déplacement de la plaque bipolaire à traiter, décalés par rapport à ceux de l'autre rangée de rouleaux, lesdites rainures étant aptes à se déformer lors du passage de la plaque bipolaire entre lesdites rangées de rouleaux de redressement, de sorte que lesdites faces opposées (15, 16) de la plaque bipolaire (5) tendent vers des plans parallèles.

2. Procédé selon la revendication 1, dans lequel les deux rangées de rouleaux de redressement sont réglées à une distance correspondant à l'épaisseur souhaitée à atteindre de la plaque bipolaire.

3. Procédé selon l'une des revendications 1 et 2, dans lequel la plaque bipolaire (5) est déplacée entre les rangées de rouleaux de redressement dans une direction perpendiculaire à la direction dans laquelle elle présente un plus grand nombre de longues rainures (11, 12).

4. Procédé selon l'une quelconque des revendications précédentes, dans lequel les deux rangées (25, 26) de rouleaux de redressement déterminent des plans parallèles de roulement.

## Patentansprüche

1. Verfahren zur Behandlung einer bipolaren Platte (5) für einen Brennstoffzellenstapel, wobei diese Platte gegenüberliegende Seiten (15, 16) aufweist und zwei tiefgezogene Bleche umfasst, die aufeinander befestigt sind, und Nuten in den gegenüberliegenden Seiten der bipolaren Platte aufweist,
wobei das Verfahren umfasst: Durchführen der bipolaren Platte (5) zwischen zwei Reihen (25, 26) von parallelen Ausrichtrollen (27, 28), wobei die Ausrichtrollen der einen der Rollenreihen in Richtung der Verlagerung der zu behandelnden bipolaren Platte zu jenen der anderen Rollenreihe versetzt sind, wobei die Nuten geeignet sind, sich beim Durchgang der bipolaren Platte zwischen den Reihen von Ausrichtrollen zu verformen, so dass die gegenüberliegenden Seiten (15, 16) der bipolaren Platte (5) zu parallelen Ebenen neigen.

2. Verfahren nach Anspruch 1, bei dem die zwei Reihen von Ausrichtrollen in einem Abstand entsprechend der gewünschten zu erzielenden Dicke der bipolaren Platte eingestellt sind.

3. Verfahren nach einem der Ansprüche 1 und 2, bei dem die bipolare Platte (5) zwischen den Reihen von Ausrichtrollen in eine Richtung senkrecht auf die Richtung, in der sie eine größere Anzahl von langen Nuten (11, 12) aufweist, verlagert wird.

4. Verfahren nach einem der vorhergehenden Ansprüche, bei dem die zwei Reihen (25, 26) von Ausrichtrollen parallele Rollebenen bestimmen.

## Claims

1. Method for treating a bipolar plate (5) for a fuel cell, this plate having opposite faces (15, 16) and comprising two stamped metal sheets fixed to each other and having grooves in the opposite faces of the bipolar plate,
the method comprising: passing the bipolar plate (5) between two rows (25, 26) of straightening parallel rollers (27, 28), the straightening rollers of one of the rows of rollers being, in the direction of the movement of the bipolar plate to be treated, offset with respect to those of the other row of rollers, said grooves being suitable to deform as the bipolar plate passes between said rows of straightening rollers, such that said opposite faces (15, 16) of the bipolar plate (5) tend to parallel planes.

2. Method according to Claim 1, wherein the two rows of straightening rollers are set at a distance corresponding to the desired thickness to be achieved for the bipolar plate.

3. Method according to either of Claims 1 and 2, wherein the bipolar plate (5) is moved between the rows of straightening rollers in a direction perpendicular to the direction in which it has a greater number of long grooves (11, 12).

4. Method according to any one of the preceding claims, wherein the two rows (25, 26) of straightening rollers define rolling parallel planes.
